# EUROPEAN PATENT APPLICATION

(11) **EP 3 153 386 A1**
(43) Date of publication of application: **12.04.2017**
(21) Application number: 15466011.2
(22) Date of filing: 05.10.2015
(51) Int. Cl.: B62H 1/02, B62K 3/00

(54) **KICK SCOOTER FRAME**

(71) Applicant: KOSTKA - kolobka, s.r.o., 788 33 Hanusovice (CZ)
(72) Inventor: KOSTKA - kolobka, s.r.o., 788 33 Hanu?ovice (CZ); Kostka, Marek, 788 33 Hanu?ovice (CZ)

(57) **Abstract**

The kick scooter frame consisting of the down tube (11), the carrying frame (12A) or the carrying frame (12B) and further from the footrest (18), the brace (19) and the kickstand (38), which consists of the tube (39), the extension (43), the flexible member (40), the foot (41) and the plug (44), whereas the carrying frame (12A) comprises the LH arm (13) with the LH rear fork (16), the RH arm (14) with the RH rear fork (17), between whose the central platform (15) is placed and whereas the carrying frame (12B) comprises also the LH arm (13) with the LH rear fork (16), the RH arm (14) with the RH rear fork (17), between whose the central platform (15) is placed, and further the LH widening (27) and the RH widening (28). The LH arm (13) together with the LH rear fork (16) and the RH arm (14) together with the RH rear fork (17) get forkwise widened towards the rear wheel (21).

## Description

### Field of Technology

The invention concerns the kick scooter frame, whose arms widen forkwise forwards the rear wheel, while the imaginary longitudinal axis of the frame central platform, which is located between the quoted arms of the carrying frame, is fully identical with the longitudinal axis of the kick scooter, which consists of an imaginary line connecting the front and rear wheels of the kick scooter.

### Present Level of Technology

The presently known solutions of the kick scooter frame utilize for the frame a material of circular or square section. Some other known solutions of the kick scooter frame utilize - in particular for the down tube - their doubling for the reason of improved stiffness and rigidity, even when still using the said material profiles. The disadvantage of these known solutions of the kick scooter frame is, that they undesirably increase the total weight of the kick scooter, which is highly arduous for the rider when using the kick scooter for off-road riding when it is sometimes necessary to carry the kick scooter over impassable obstacles, or when climbing steeper slopes.

Another known solution of the kick scooter frame is represented by the published patent application No. 10 2010 012 171A1 by applicant Franz Zehenmaier, whose principle is mainly the fact, that the tubes towards the rear wheel, from which consists the carrying frame, are mutually parallel. The disadvantage of such design solution of the carrying frame, according to the published patent application as well as according to other similar solutions is, that the rear part of the area of the said carrying frame, in the portion where the foot of the rider rests when riding, does not provide sufficient place for the rider to change the foot position in such a manner that suits to his/her riding style.

Another disadvantage of these known solutions, whose principle is that the tubes from which consists the carrying frame are mutually parallel, is that it does not enable using rear wheel with various hub sizes.

Another disadvantage of the known solutions of the kick scooter frame is, that they insufficiently solve how to prevent damaging the front part of the carrying portion of the kick scooter frame when a stone or another obstacle is accidentally hit.
The design solution of the above quoted published patent application No. 10 2010 012 171A1 contains a plate, which is shifted forward ahead of the front part of the carrying frame and thus forms a protection of this part of the kick scooter. However, the disadvantage of this overall design solution is, that the front part of the said frame together with the forward-shifted plate are with a single plane, and since the plate is not bent or inclined upwards, it presents a permanent risk in case of unwanted hitting even a low or small obstacle.

### Disclosure of the Invention

The above described disadvantages will be within a substantial extent removed, and the disclosure of the invention will be fulfilled by the kick scooter frame consisting of the down tube, basic carrying frame or widened carrying frame, footrest, brace and kickstand, which consists of tube, flexible member, foot and the plug, whereas the basic carrying frame consists of the LH arm, which smoothly transforms into the LH rear fork, then of the RH arm, which alike transforms into the RH rear fork, between whose the central platform is placed, and whereas the widened carrying frame includes also the LH arm, which smoothly transforms into the LH rear fork, further also the RH arm, which alike transforms into the RH rear fork, between whose there is located the central platform, and further the LH widening and RH widening according to the invention, whose principle consists in that the LH arm together with the LH fork and the RH arm together with the RH fork get forkwise widened towards the rear wheel, while the imaginary longitudinal axis of the central platform is identical to the longitudinal axis of the kick scooter, which consists of the imaginary connection line of the front and rear wheels of the kick scooter. And further by the fact that the LH widening is permanently connected to the LH side of the front part of the LH arm and the RH widening is permanently connected to the RH side of the front part of the RH arm as well. Further by the fact that the front part of the LH arm as well as the front part of the RH arm are shaped into the elongated U-shape towards the front wheel and at the same time they are bent upwards and shaped in such a manner, that they are getting closer to each other, whereas in the point of their quoted approach they are permanently fixed to the lower part of the down tube. And further by the fact that the front part of the LH arm as well as the front part of the RH arm are modified in shape and bent upwards, thus they get closer to each other, till they eventually meet in a single point, where a permanent connections to the lower part of the down tube is carried out. And also by the fact, that the LH arm is raised up by bending towards the rear wheel, thereby it smoothly transforms into the LH rear fork, whereas the RH arm is also raised up by bending towards the rear wheel, thereby it smoothly transforms into the RH rear fork. And also by the fact, that the dropout is formed at the LH rear fork and the dropout is formed at the RH rear fork too, whereas both these dropouts are fully identical in shape and dimensions. And also by the fact, that the upper surfaces of the LH and RH arms as well as the upper surfaces of the LH and RH widenings are fitted with more than two projections, separated from each other by regular gaps, while the upper surface of the central platform is fitted with the strip, which is permanently fixed by means of unmarked rivets or other fastening devices, which are mutually separated by regular spaces. And also by the fact, that the projections or the strip are fitted onto the upper surfaces of the parts of which both variants of the carrying frame consist in various combinations, while the strip profile is always adapted either to the flat surface of the central part or the round surface of the LH arm, RH arm, Lh widening or RH widening. And also by the fact, that the U-shaped reinforcement is fastened to the front part of the LH arm as well as to the front part of the RH arm, whereas one of the imaginary arms of the U-shaped reinforcement is permanently fixed to the lower surface of the LH arm and the other part of the imaginary arms of the U-shaped reinforcement is permanently fixed to the lower surface of the RH arm. And also by the fact, that the LH reinforcement is permanently fixed to the lower surface of the LH arm and the RH reinforcement is permanently fixed to the lower surface of the RH arm, whereas the front parts of the said reinforcements towards the front wheel touch the imaginary arms of the U-shaped reinforcement and the LH reinforcement towards the rear wheel is permanently fixed to the lower surface of the LH rear fork and the RH reinforcement towards the rear wheel is permanently fixed to the lower surface of the RH rear fork. And yet by the fact, that flexible member is inserted into the unmarked hollow part, which passes through the whole length of the tube and also through the extension; one end of the flexible member being fastened inside the foot, while the other end of the flexible member passing through the unmarked hollow part of the bushing, where it is fastened in the lower part of the tube, in the extension or in the plug. And further by the fact that the unmarked loose end of the mudguard is fitted with the sleeve, in which at least two slots are formed. And yet by the fact that into the hollow space of the LH rear fork, eventually into the hollow space of the RH rear fork, an adaptor is inserted. And further by the fact that the down tube is of drop-like cross section along its whole length.

This design solution of the kick scooter frame allows the rider to use substantially larger area of the carrying frame already at everyday tourist ride, which brings the advantage, that the rider has better option in choosing the place for positioning his/her foot when riding, which proves its worth in substantially lower exertion.

Another advantage is, that dropouts are formed in both rear arms of the kick scooter frame, which allow to insert quickly and easily fastening devices, such as nuts or quick releases, which enable to demountably fasten the rear wheel into the said forks in such a manner, that the quoted fastening devices do not protrude beyond the outline of the rear forks. Another advantage of such design arrangement is that it removes the danger of injuring the rider's foot by the protruding fastening devices.

Another advantage is, that the upper surface of the LH arm, the RH arm and the central platform as well as the upper surface of the LH and RH widenings are fitted with projections or stickers. These projections, due to their shape arrangement and the stickers, which are made of anti-slip material, effectively prevent to slipping the rider's foot off the carrying frame surface, even when riding the kick scooter in bad weather.

Another advantage is, that the U-shaped reinforcement is fastened to the front part of the kick scooter frame and at the same time to the lower surfaces of the LH arm and the RH arm, which serves as a bumper area, which prevents to damaging the kick-scooter frame at off-road ride or when negotiating obstacles, and it also substantially stiffens the said kick scooter frame. Another advantage lies in the fact that both the lower areas of the LH and RH arms are equally fitted with reinforcements, which again substantially stiffen the said areas of both arms and at the same time it prevents to their damaging when the ride takes place on rough terrain or when negotiating obstacles.

Another advantage lies in the arrangement for easy manipulation with the kickstand; in case that the rider intends to discontinue the ride and park the kick scooter using the said kickstand or on the contrary, when placing the kickstand back into the riding position before the rider assumed to continue the ride, the material features of the flexible member - such as flexibility, extensibility and shrinkability - are used to facilitate easy and fast releasing of the kickstand from the riding position and its safe placing into the parking position and vice versa.

Another advantage is, that the free end of the mudguard is fitted with the sleeve, into which lamp can be inserted, whereas the said sleeve is fitted with at least two slots, through whose the light is radiated to behind the kick scooter, which makes possible to use the kick scooter safely even at bad visibility.

Yet another advantage is, that in case when the kick scooter is not fitted with the mudguard, the lamp can be placed by means of the adaptor into the hollow space of the LH rear fork, eventually into the hollow space of the RH rear fork, which equally makes possible - equally to the above described advantage - to use the kick scooter safely even at bad visibility.

### Layout of Illustrations at the Drawings

The said invention shall be further more closely explained and described at a specific version, which is shown as an example, which however cannot be considered to be limiting in any way, with reference to the enclosed illustrations, where:
FIG. 1 illustratively represents overall axonometric view on one of many possible arrangements of the kick scooter frame;
FIG. 2 represents axonometric view from the LH side to the kick scooter frame, which is further within the description of the examples of the invention referred to as the basic frame of the kick scooter 12A;
FIG. 3 represents axonometric front view onto the kick scooter frame, which is further within the description of the examples of the invention referred to as the basic frame of the kick scooter 12A;
FIG. 4 represents axonometric bottom view onto the front part of the kick scooter frame;
FIG. 5 represents axonometric bottom view onto the kick scooter frame, which is further within the description of the examples of the invention referred to as the basic frame of the kick scooter 12A;
FIG. 6 represents axonometric rear view onto the rear part of the kick scooter frame, which is further within the description of the examples of the invention referred to as the basic frame of the kick scooter 12A;
FIG. 7 represents detailed axonometric view onto the rear part of the LH rear fork, in which the LH dropout is formed;
FIG. 8 represents detailed axonometric view onto the rear part of the RH rear fork, in which the RH dropout is formed;
FIG. 9 represents orthogonal projection of the top view onto the kick scooter frame, where its individual parts are fitted with projections or stickers;
FIG. 10 represents the top view of five shape versions, marked with letters A, B, C, D and E, in whose the individual projections can be made;
FIG. 11 represents orthogonal projection the view of the strip, where rivets or other fastening devices are indicated within regular intervals;
FIG. 12 represents orthogonal projection of overall view of the kick scooter frame, which is further within the description of the examples of the invention referred to as the widened kick scooter frame 12B;
FIG. 13 represents axonometric rear view of the rear part of the kick scooter frame, which is further within the description of the examples of the invention referred to as the widened kick scooter frame 12B;
FIG. 14 represents detailed axonometric view of the down tube in cross section;
FIG. 15 represents orthogonal projection of detailed view of the upper part of the down tube;
FIG. 16 represents orthogonal projection of detailed view of the down tube, onto which the kickstand in the ride position is movably fastened;
FIG. 17 represents axonometric detailed view of the lower part of the kick scooter frame with the kickstand, which is flipped out into the parking position;
FIG. 18 represents orthogonal projection of detailed view of the kickstand;
FIG. 19 represents axonometric detailed view of the rear part of the kick scooter frame, which is fitted with removable mudguard;
FIG. 20 represents axonometric detailed view of the rear part of the kick scooter frame, which is fitted with fixed mudguard on whose loose end sleeve is mounted;
FIG. 21 represents axonometric detailed view of the free end of the LH rear fork, which is fitted with tail lamp.

### Example of Implementation of the Invention

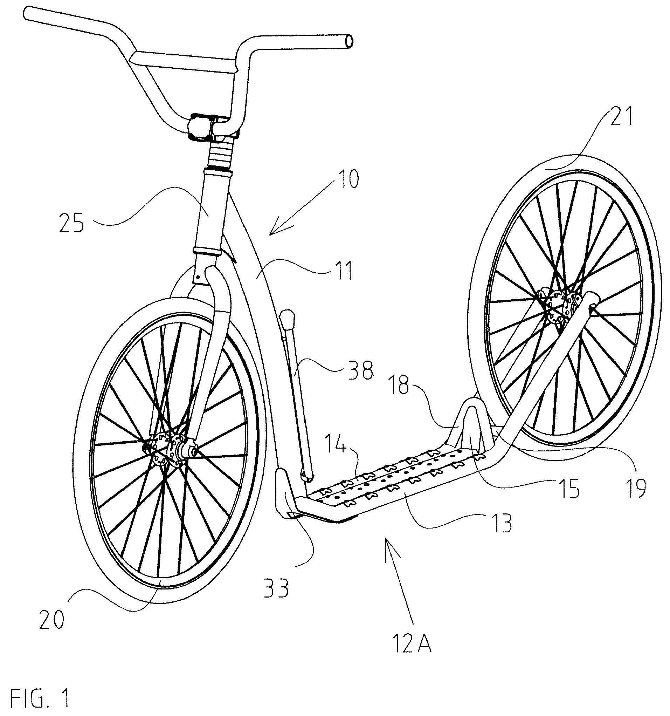

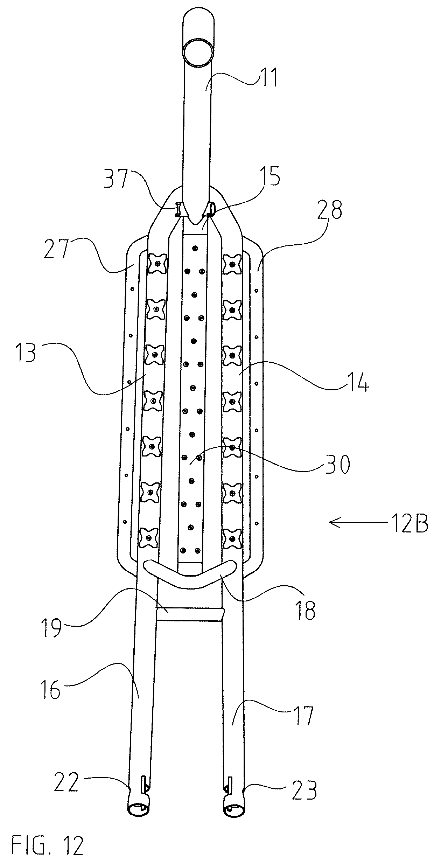

At FIG. 1, one of many variants of the kick scooter frame 10 according to the invention is shown. The kick scooter frame 10 consists of the down tube 11, the carrying frame 12A; the footrest 18, the brace 19 and the kickstand 38. Respectively, the frame 10 of the kick scooter according to the inventions consists of the down tube 11, the carrying frame 12B, which contains all parts that are contained within the carrying frame 12A and which in addition contains yet another parts, such as the LH widening 27 and the RH widening 28, as apparent from the FIG. 12.

For more transparent description of the examples of the invention versions, the following text will include separate description of the version of the kick scooter frame 10 utilizing the carrying frame 12A and separate description of the kick scooter frame 10 utilizing the carrying frame 12B.

The following paragraphs describe the arrangement of the kick scooter frame 10 utilizing the carrying frame 12A.

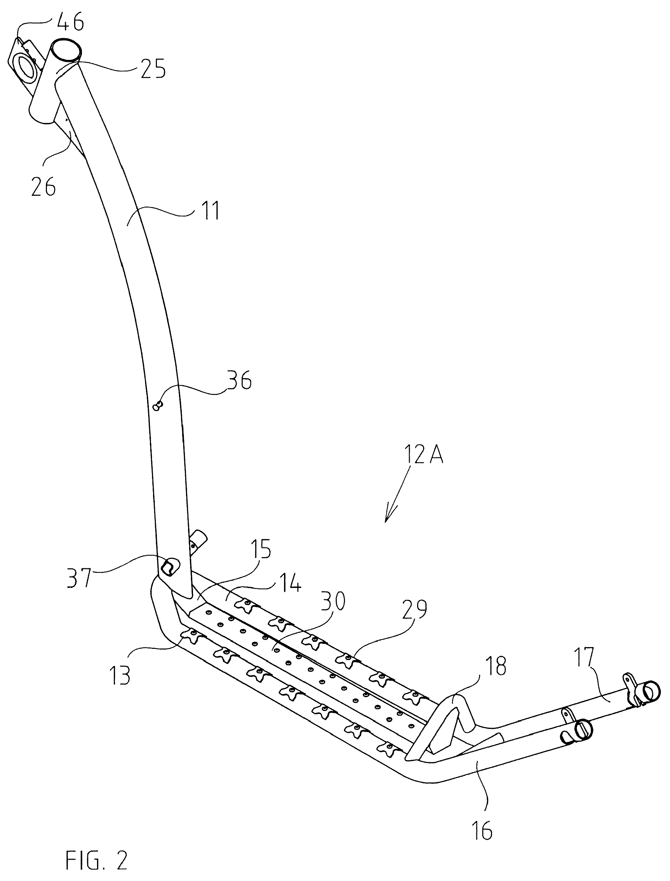

As shown mainly at FIG 1 to FIG. 3, the carrying frame 12A is permanently fixed to the lower end of the down tube 11. The said carrying frame 12A consists of the LH arm 13, the RH arm 14 and the central platform 15. The front part of the LH arm 13, the RH arm 14 are towards the front wheel 20 modified in shape in several shape variants, which are mode closely described within the following articles. The first variant consists in that the said parts 13, 14 and 15 are bent upwards and at the same time they are shaped to be brought towards each other, till they eventually meet in a single point. Such shaped front parts of the LH arm 13 and the RH arm 14 are together permanently fixed to the lower part of the down tube 11. Another shape variant is the solution which consists in that the front part of the LH arm 13 and also the front part of the RH arm 14 are towards the front wheel 20 shaped into the look of elongated U letter and at the same time they are bent upwards, whereas in the point of the quoted approach the permanent connection with the lower part of the down tube 11 is carried out.
Between the LH arm 13 and the RH arm 14 - as apparent from the FIG. 2 - the central platform 15 is inserted; its front end towards the front wheel 20 being also bent upwards and fixed to the lower end of the down tube 11.

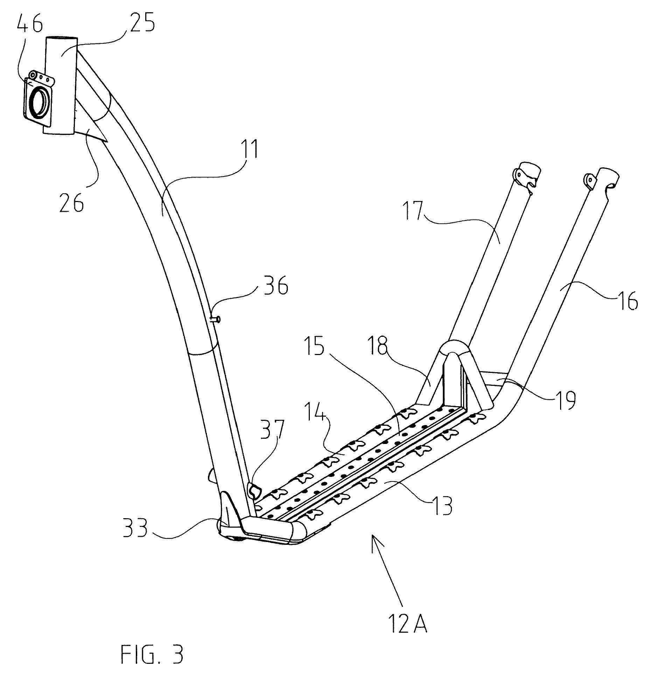

The rear parts of both arms 13 and 14, as apparent from FIG. 1 to FIG. 3 are mutually interconnected by the footrest 18.
The other end of the central platform 15 towards the rear wheel 21, as apparent mainly from FIG. 3 is also bent upwards and permanently fixed to the footrest 18. The said footrest 18, together with the raised end of the central platform 15, forms with advantage a supporting area, where the rider may support his/her foot when riding and thus increase the power of his/her other foot, with which he/she kicks against the ground on which the kick scooter rides.

Connection of the front end of the said central platform 15 to the down tube 11 and the opposite end of the central platform 15 to the footrest 18 is moreover being carried out in such a manner, that the longitudinal axis of the central platform 15 is identical with the longitudinal axis of the kick scooter, which if formed by the imaginary link between the front wheel 20 and the rear wheel 21 of the kick scooter.

From the point, where is LH arm 13 and the RH arm 14, which form the carrying frame 12A, are mutually interconnected by the footrest 18, as apparent from FIG. 1 to FIG. 3, the LH arm 13 is bent upwards towards the rear wheel 21 and smoothly transforms into the LH rear fork 16. The RH arm 14 is also bent upwards with the same angle towards the rear wheel 21 and smoothly transforms into the RH rear fork 17, too. The angle, under which is the end of the LH arm 13, which smoothly transforms into the LH rear fork 16 as well as the end of the right arm 14, which also smoothly transforms into the RH rear fork 17, are bent upwards, is variable with great advantage.
Size of such angle of rise corresponds to the distance, of which the imaginary central axis of the rear wheel 21, which is used at manufacturing of the kick scooter, is distant from the terrain, on which the kick scooter moves when riding.

As apparent from FIG. 1, both arms 13 and 14, as well as the central platform 15, which together form the carrying frame 12A, are modified in such a manner, that the said parts together form a plane, which is in one variant always parallel to the terrain, on which the kick scooter moves when riding. In another variant, the said parts 13, 14 and 15, which together form the carrying frame 12A, can be together shaped in such a manner, that the carrying frame 12A may be with advantage slightly inclined either in negative angle, or in another case in positive angle towards the terrain, on which the kick scooter moves when riding.

The advantage of the said modification of the front part of the LH arm 13, the RH arm 14 and also the front part of the central platform 15, which are bent upwards in equal angle, thereby the said modification of the said parts, which altogether form the carrying frame 12A, accomplishes increasing of the kick scooter approach angle, most important for off-road riding and when negotiating obstacles.

Before the rear wheel 21 - as shown mainly at FIG. 1, FIG. 3 and also at FIG. 2 and FIG.3 - the LH rear fork 16 is permanently connected to the RH rear fork 17 by means of a brace 19. The distance of the brace 19 location from the rear wheel 21 is advantageously variable and it is specified by the size of the said rear wheel 21, with which the kick scooter is equipped.

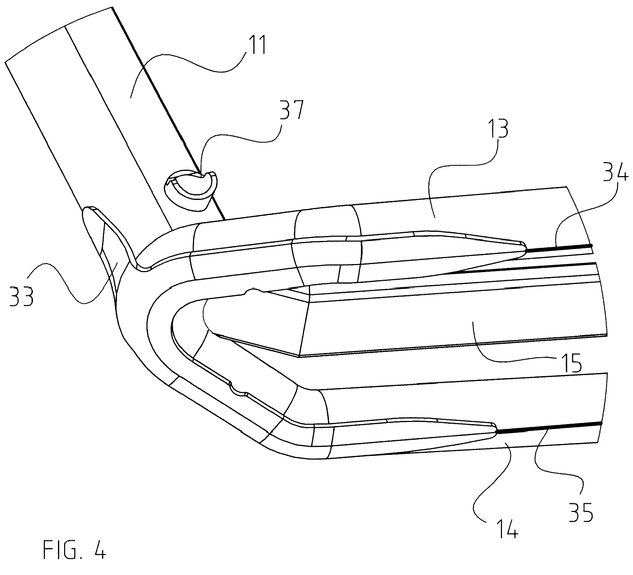

FIG. 4 shows axonometric view of the front part of the carrying frame 12A. On this illustration at FIG. 4 it is apparent, that to the point, where the LH arm 13 and the RH arm 14 are permanently fastened to the down tube 11, also the U-shaped reinforcement 33 is fastened.
One of the imaginary unmarked arms of the U-shaped reinforcement 33 is permanently fastened to the lower part of the LH arm 13 and the other imaginary unmarked arms of the U-shaped reinforcement 33 is permanently fastened to the lower part of the RH arm 14. The arched front part of the said U-shaped reinforcement 33 - as visible mainly at FIG. 4 as well as at FIG. 1 - is bent upwards and permanently fastened to the front part of the lower end of the down tube 11.

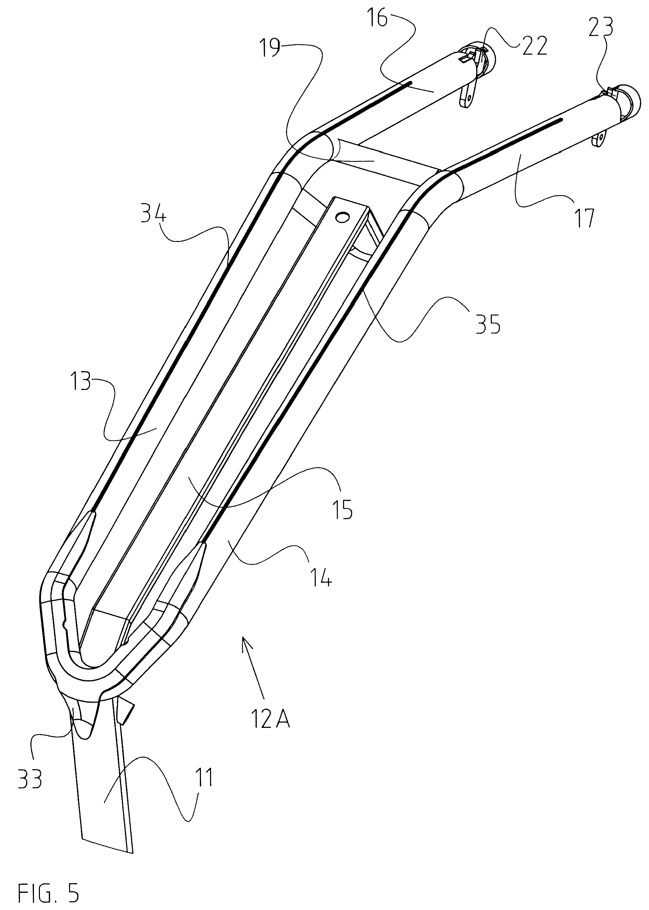

As apparent from FIG. 5, to the lower part of the LH arm 13 the LH reinforcement 34 is permanently fastened, while to the lower part of the right arm 14 the RH reinforcement 35 is permanently fastened. The front parts of both said reinforcements 34 and 35 towards the front wheel 20 are touching the imaginary unmarked arm of the said U-shaped reinforcement 33.
The LH reinforcement 34 is, towards the rear wheel 21 in the point where the LH arm 13 is bent upwards and smoothly transforms into the LH fork 16, also bent upwards and permanently fastened to the lower surface of the said LH fork 16. The RH reinforcement 35 is, towards the rear wheel 21 in the point where the RH arm 14 is bent upwards and smoothly transforms into the RH fork 17, also bent upwards and permanently fastened to the lower surface of the said RH fork 17. The angles of rise of both said reinforcements 34 and 35 are equal to the angles, under whose the LH fork 16 and the RH fork 17 are bent upwards.

The advantage of the above described location of the U-shaped reinforcement 33 at the front part of the lower end of the down tube 11 is, that it reinforces the said places and further it forms bumper zone, which prevents to damaging to the said place at off-road riding. The common advantage is connection of the said reinforcements 34 and 35 to the lower part of the said arms 13 and 14 as well as to the lower part of the said forks 16 and 17, which substantially improves stiffness of the said parts and prevents to their damaging when driving the kick scooter off the road.

The LH arm 13 together with the LH rear fork 16 and the RH arm 14 together with the RH rear fork 17 widen fork-like from each other towards the rear wheel 21. The longitudinal axis of the central platform 15 is in this version, too, identical to the longitudinal axis of the kick scooter, which is formed by the imaginary line connecting the front wheel 20 and the rear wheel 21 of the scooter. The angle of the fork-like widening of the said arms 13 and14 together with the rear forks 16 and 17 is advantageously variable and at manufacturing of kick scooters it is chosen in such a manner, that the distance between the LH arm 13 together with the LH rear fork 16 and the RH arm 14 together with the RH rear fork 17 corresponds to the size of unmarked hub of the rear wheel 21, which is used for the given model at manufacturing.

The parts, that is the LH arm 13, which smoothly transforms into the LH rear fork 16 as well as the RH arm 14, which too smoothly transforms into the RH rear fork 17 and which are constituents of the carrying frame 12A, may be produced with advantage in several variants, as described above. In the first variant, the LH arm 13 together with the LH rear fork 16 and the RH arm 14 together with the RH rear fork 17 are manufactured from one undivided piece of material and shaped into the look of elongated U-shape, while maintaining the shape arrangement, which is described above, whereas their part being bent upwards towards the front wheel 20 is permanently fastened to the lower end of the down tube 11.
Another possible variant of the production arrangement of the said parts is, that the LH arm 13, which smoothly transforms into the LH rear fork 16 and the RH arm 14, which smoothly transforms into the RH rear fork 17, are manufactured as separate parts. The LH arm 13 together with the LH rear fork 16 and the RH arm 14 together with the RH rear fork 17 are arranged analogically to the above-mentioned description, while their front parts towards the front wheel 20 are permanently fastened to the lower part of the down tube 11.

The ending parts of both said rear forks 16 and 17 are arranged in a manner that is described further and which enables easy, fast and safe mounting of the rear wheel 21.

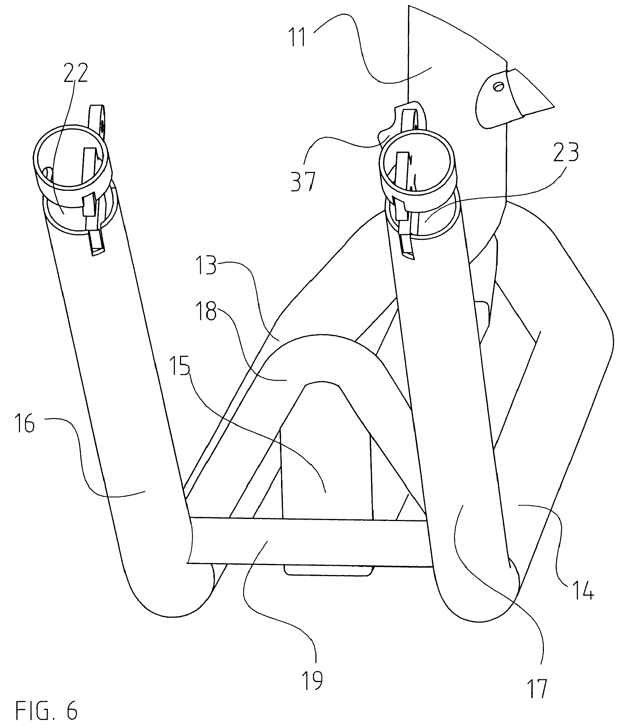

FIG. 6 represents in axonometric projection a detailed back view onto the rear end of the carrying frame 12A of the kick scooter, where the LH dropout 22 is formed at the end of the LH rear fork 16, and the RH dropout 23 is formed at the end of the RH rear fork 17. Both said dropouts 22 and 23 are fully equal in shape and dimensions.

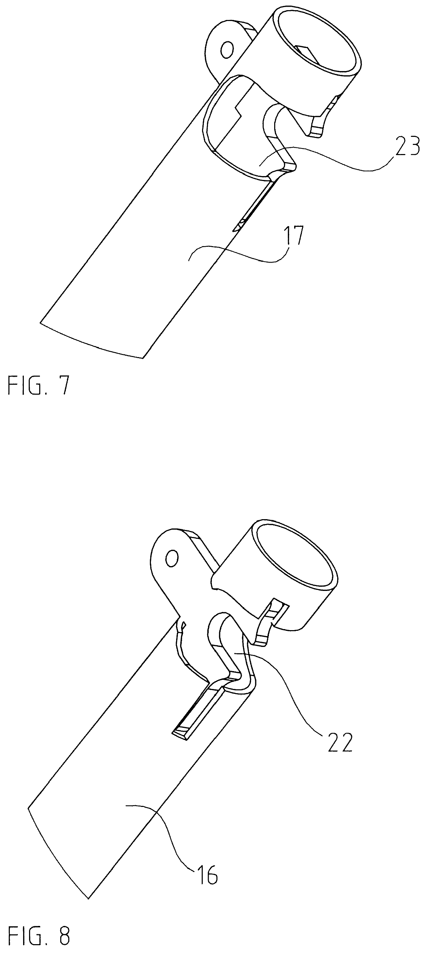

FIG. 7 represents detailed view in axonometric projection onto the LH dropout 22, while FIG. 8 represents detailed view in axonometric projection onto the RH dropout 23. Both said dropouts 22 and 23 enable fast, easy and safe mounting of for example unmarked fastening nuts or quick releases, etc., by whose the rear wheel 21 is demountably fastened in the said dropouts 22 and 23 in such a manner, that the said unmarked nuts or quick releases do not whatsoever protrude outside the outline of both said part of the rear forks 16 and 17. Shape and size of both said dropouts 22 and 23 is with advantage variable with regards to size and shape of said unmarked fastening nuts or quick releases, that are used for mounting of the rear wheel 21. Among others, the achievement of the above described solution is, that the rider's foot would not suffer injury at i.e. power ride, when the foot is often moving along the said dropouts 22 and 23, in whose the rear wheel 21 is mounted.

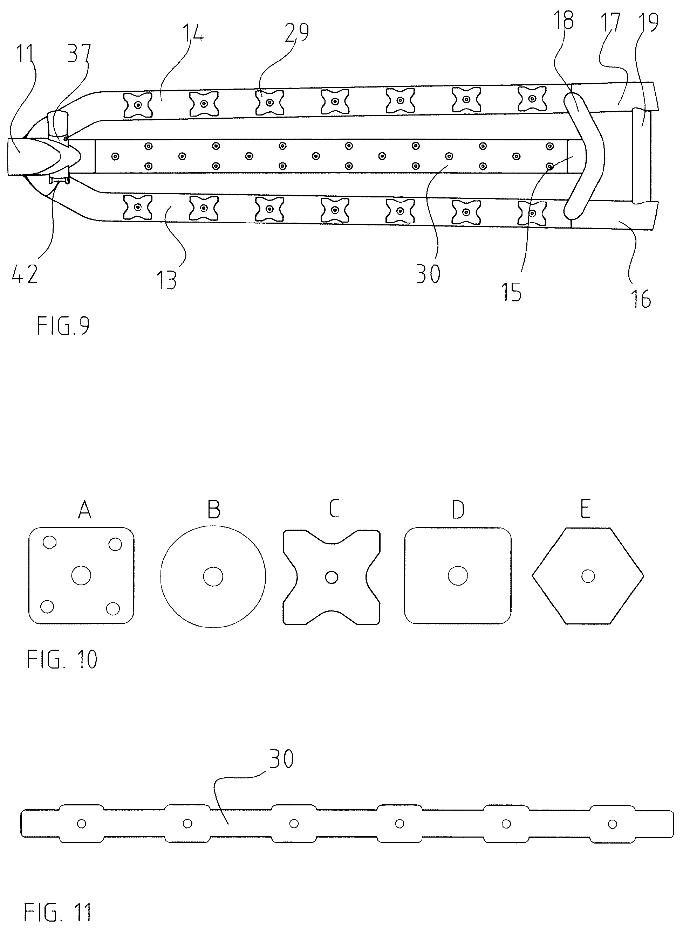

In order to prevent undesirable slipping-off of the rider's foot, which is placed upon the surface of the parts of whose the carrying frames 12A or also 12B consist, the surface of the LH arm 13, RH arm 14, the central platform 15, LH widening 27 and RH widening 28 fitted with advantage with projections 29 or strip 30. The said parts 29 or 30 might be placed on the surface of the part, of which the carrying frames 12A or 12B consist, in various combinations, whose examples are more closely described further.
One of the possible examples of use of parts 29 and/or 30 is shown at FIG. 9, where every single upper surface of the LH arm 13 as well as that of the RH arm 14, which are constituents of the carrying frame 12A, are equally fitted with more than two projections 29, while the said projections 29 are separated from each other by regular spaces. The said projection 29 may be manufactured in various shape designs, as indicated at FIG. 10, where several examples of shape variants of such projections 29, marked with letters A, B, C, D and E, are shown. The quantity of possible shape variants of the quoted projection 29 is in no meaning exhausted by the examples, which are shown at FIG. 10.

From FIG. 9 it is futher apparent, that the upper surface of the central platform 15, which is also a part of the carrying frames 12A or 12B, is fitted with the mentioned examples of components, which are provided with anti-slip treatment. One of the possible examples is the strip 30, a variant of which is shown at FIG. 11. The said strip 30 is permanently fixed for example by unmarked rivets or other fastening devices to the upper surface of the central platform 15, while these unmarked rivets or other unmarked fastening devices are separated from each other by regular spaces. The upper parts of the used unmarked rivets or other fastening devices then form the desirable anti-slip surface.
In another case, the upper surface of the central platform 15 may be fitted - instead of the said strip 30 - with unmarked stickers, which are provided with anti-slip treatment. Another variant may be such, that the upper surfaces of all parts, of which consist the carrying frames 12A or 12B, are fitted with the strip 30. The said strip 30 is also permanently fixed to the upper parts, of which consist the carrying frames 12A or 12B, using unmarked rivets or other fastening devices. The upper parts of said unmarked rivets or other fastening devices thus form the desirable anti-slip surface.
Yet another variant may be such, that each individual upper surfaceof the parts, of which consist the carrying frames 12A or 12B, is fitted only with projections 29 or only with the strip 30. In another case the said projections 29 or the strip 30 may be placed onto the upper surfaces of the parts, of which consist the carrying frames 12A or 12B, in various combinations. In case that the strip 30 is placed onto the upper surfaced of either the central platform 15 or the LH arm 13 or the RH arm 14 or the LH widening 27 or also the RH widening 28, the profile of the strip 30 is adapted to either flat surface of the central platform 15 or the round surface of the said parts 13, 14, 29 and 30.

Within the following paragraphs, arrangement of the kick scooter frame 10 utilizing the carrying frame 12B is described.

FIG 12 represents overall arrangement of the kick scooter frame 10 utilizing the carrying frame 12B.

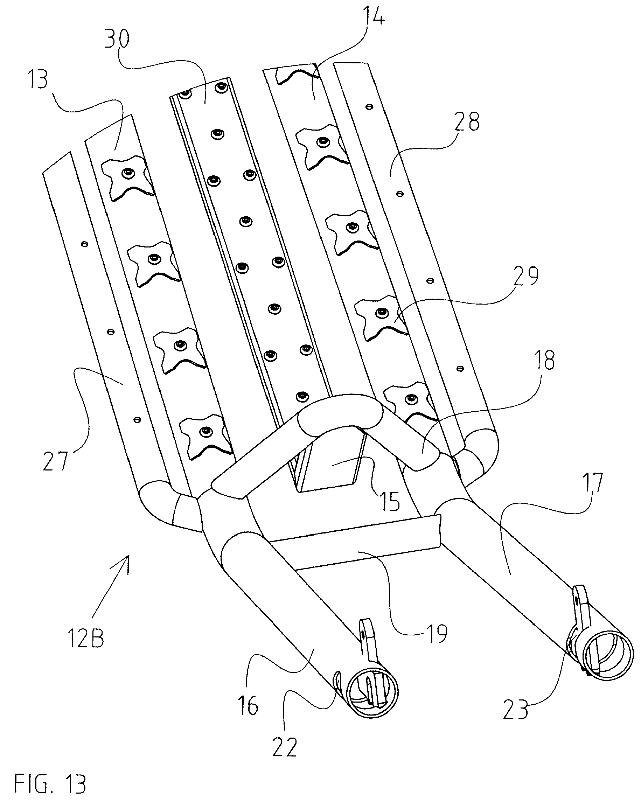

FIG. 13 shows detailed view in axonometric projection onto the rear end of the carrying frame 12B. The carrying frame 12B includes all the three parts, of which consists also the carrying frame 12A and which are described in detail within the preceding paragraphs, which described the said carrying frame 12A. The said part, of which consists the carrying frame 12A and which are included within the carrying frame 12B, are fully identical and shape and dimension, while their arrangement within the carrying frame 12A and also within the carrying frame 12B is also fully identical.

The difference between the carrying frame 12B and the carrying frame 12A of kick scooter 10 is apparent from FIG. 12, where to the LH side of the LH arm 13, LH widening 27 is permanently fixed and to the RH side of the RH arm 14, RH widening 28 is permanently fixed. By such hereby described arrangement of the carrying frame 12B a significant widening of the area is achieved, compared to the area of the carrying frame 12A. The shape arrangement and dimensions of both said widenings 27 and 28 are identical. This widened variant of the carrying frame 12B maintains all single features and advantages of the carrying frame 12A. The advantage of such widened carrying frame 12B manifests itself mainly when using the kick scooter for scooter mushing or when riding long slopes downhill.

For clarity of the description of the invention, the following text describes the arrangement of the kick scooter frame 10, which is common for both carrying frame 12A and carrying frame 12B.

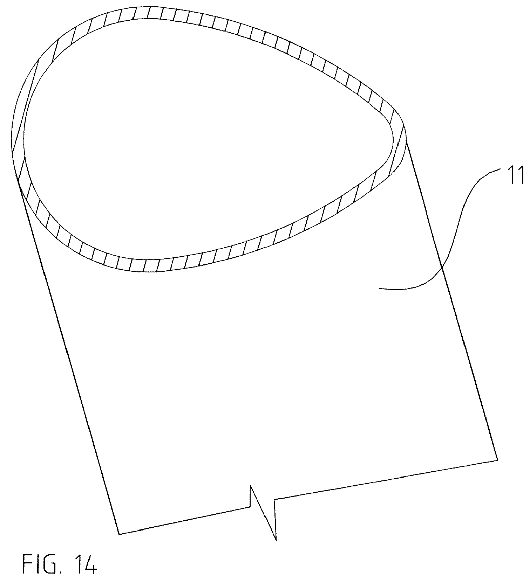

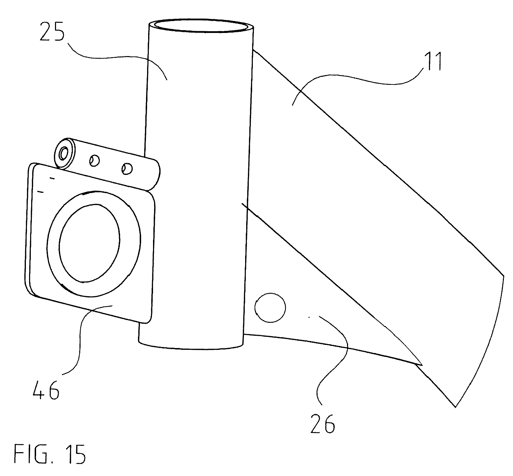

The tube, of which the said down tube 11 is made, is with advantage of drop-like section along its whole length as apparent from FIG. 14, which represents detailed view of the said part in cross-section. The advantage of such drop-like shape section of the down tube 11 is, that it comprises both the required strength and stiffness and moreover it is aesthetically attractive.
To the upper end of the said down tube 11, the head tube 25 is permanently fixed for rotary mounting of unmarked front forks. To the lower surface of the said down tube 11 with the head tube 25, the fill-out 26 is permanently fixed, as apparent mainly from FIG. 15 and also from FIG. 2 and FIG. 3. The said fill-out 26 substantially improves strength and stiffness of this part of the kick scooter frame 10. Within the area of the fill-out 26, the unmarked opening is made. The shape and dimensions of the quoted unmarked opening are advantageously variable, which makes possible to use the opening for an unmarked security device, i.e. for locking the kick scooter.

To the front side of the head tube 25 - as shown at FIG. 15 - the holder 46 is permanently fixed. In case when the kick scooter is used for scooter mushing (riding with a team of dogs), an unmarked flexible leash can be demountably placed into the said holder 46 together with an unmarked flexible adaptor, whereas these said unmarked parts enable safe leading of dog(s).

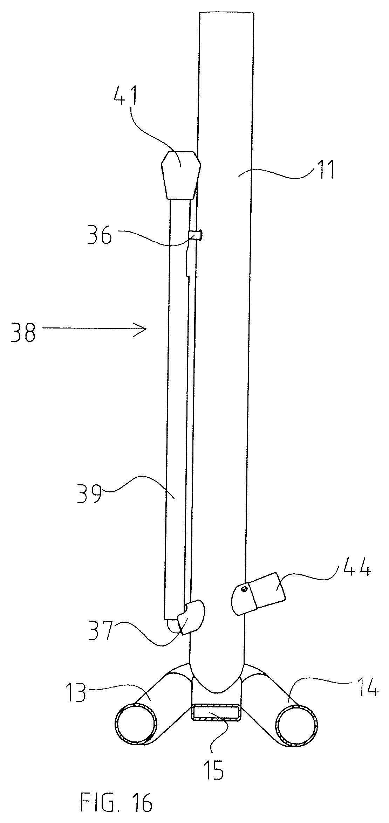

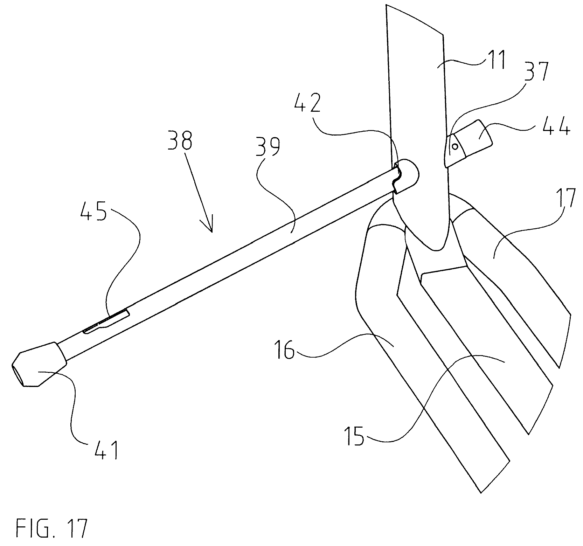

On the down tube 11, as apparent mainly at FIG. 16 and FIG. 17, both the holder 36 and also the bushing 37 are fastened, to whose the kickstand 38 is movably fitted. At FIG. 16, the said kickstand 38 is illustrated in the riding position.

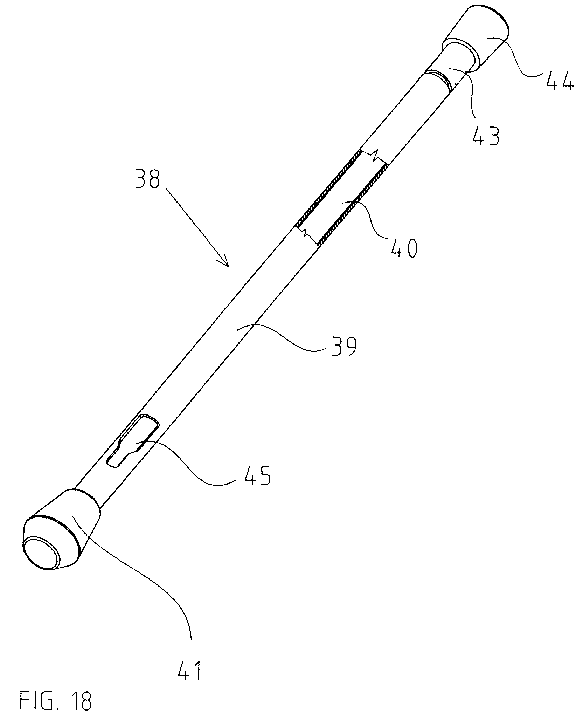

FIG. 17 represents detailed view of the kickstand 38, here being illustrated in the functional parking position, in which the said kickstand 38 leans against terrain, through the foot 41. FIG. 18 represents detailed view on the kickstand 38, which consists of the tube 39, the flexible member 40, the foot 41, the extension 43 and the plug 44.
As shown at FIG. 16 as well as at FIG. 17, the said bushing 37 is permanently fastened in the unmarked opening, which leads askew upwards and passes through two walls of the down tube 11. The length size of the bushing 37 is larger than the diameter of the down tube 11, which means that the lower end as well as the upper end of the bushing 37 protrudes outside the outline of the down tube 11. The lower end of the bushing 37 - as apparent from FIG. 16 also from and FIG. 17 - is shaped into the look of a bowl 42, being half-spherically rounded.
The lower end of the tube 39 is half-spherically shaped as well, while the half-spherical rounding of the said lower end of the tube 39 is equal to the shape of the bowl 42. The size of the half-spherical rounding of the lower end of the tube 39 is however smaller, so that the lower half-spherical end of the tube 39 could easily move in the half-spherical bowl 42.

When mounting the kickstand 38, the flexible member 40 is inserted into the hollow part of the tube 39, which can be advantageously made of a rubbed band, but nevertheless it can be made also of any other material that meets the condition of constant flexibility, extensibility and shinkability. The said flexible member 40 passes through the whole length of the said tube 39 and passes also through the hollow part of the bushing 37. The upper end of the flexible member 40 may be fastened within the foot 41, while the opposite end of the flexible member may be fastened within the plug 44. In another variant the upper end of the flexible member 40 is fitted within the upper part of the tube 39, while the opposite end of the flexible member 40 may be fitted in the lower part of the tube 39, or within the extension 43.

As apparent from FIG 17 and also from FIG. 18, in the upper part of the tube 39 the longitudinal cut-out 45 is made; the shape of the cut-out corresponds to that of the holder 36.
When riding the kick scooter, the tube 39 is demountably fastened to the holder 36 by means of the cut-out 45, while the holder 36 is permanently fastened to the down tube 11, as apparent from FIG. 16. When the rider terminates the ride and wishes to use the functionality of the kickstand 38, he/she would pull the foot 41 and using the material features of the flexible member 40, whose are mainly the flexibility, extensibility and shrinkability, the tube 39 would get released from the holder 36, and consequently the kickstand 38 would lean against the ground by means of the foot 41. Shifting the kickstand 38 into the parking position is apparent from FIG. 17.
In case that the rider wishes to start the ride the kick scooter, he/she would pull the tube 39 and again using the quoted material features of the flexible member 40 he/she would place the said tube 39 and thus the whole kickstand 38 to the holder 36 by means of the cut-out 45.

From FIG. 1, as well as from FIG. 16 and FIG. 17 it is apparent, that the shown location of the kickstand 38 at the LH side of the down tube 11 enables to unfold the said kickstand 38 to the parking position only to the LH side of the kick scooter, when looking towards the front wheel 20.
If it is necessary for any reason to make possible unfolding the kickstand 38 to the RH side of the kick scooter as well, when looking towards the front wheel 20, it can be easily reached by the below described way. The unmarked opening for fastening of the said bushing 37, which leads, too, askew upwards have its lower end at the RH side of the down tube 11. The holder 36 would be also fastened at the RH side of the down tube 11. Functionality and way of using of the kickstand 38 would not change whatsoever by such opposite-side location at the down tube 11.

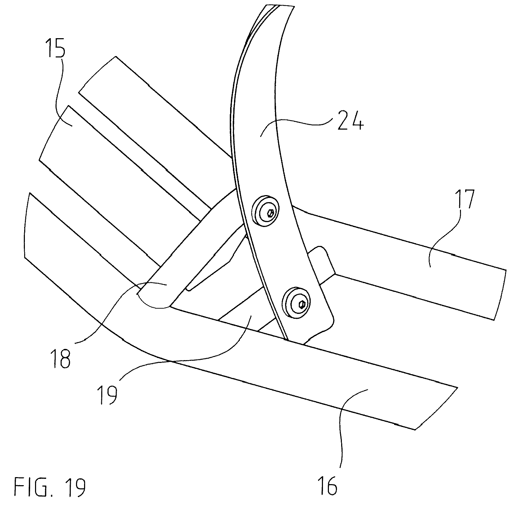

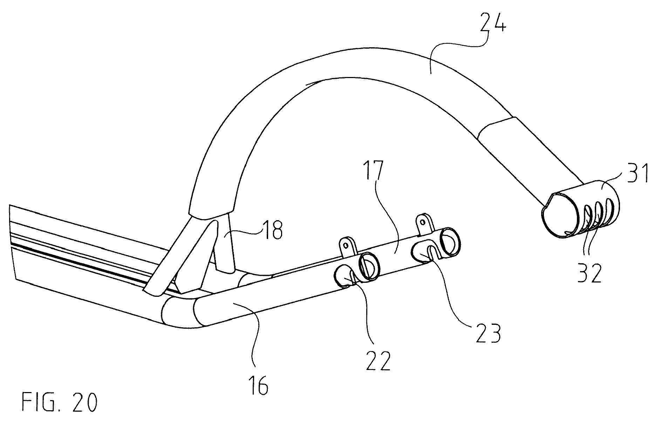

As apparent from FIG. 19, the said footrest 18, as well as the brace 19, are fitted with unmarked openings, which enable demountable mounting of the mudguard 24, using unmarked fastening parts, such as bolts and nuts. At the opposite end of such mudguard 24 as apparent from FIG. 20 - the sleeve 31 is fastened. Within the side in view of the said sleeve 31 at least two slots 32 are formed. Into the inside space of the sleeve 31, an unmarked lamp can be placed; its light radiates through the said slots 32 in the backward direction relative to the kick scooter. The advantage of this described arrangement of the sleeve 31 is, that ride with the kick scooter is safe even at reduced visibility.
Another method of fastening the mudguard 24 is shown at FIG. 20, from which it is apparent that one its end is solidly fixed to the footrest 18, while on its opposite, loose end the sleeve 31 for placing of an unmarked lamp is fastened in the same method as described within the previous paragraph.

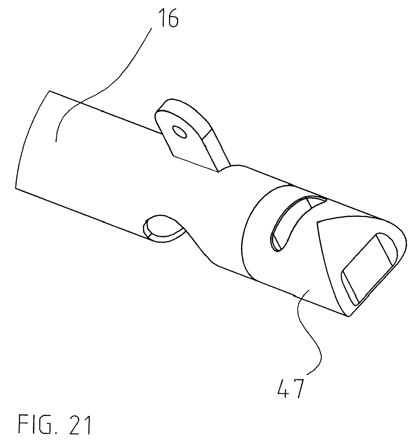

In case that the kick scooter is not equipped with the said mudguard 24 with the sleeve 31, into which an unmarked lamp is placed, for illuminating the rear part of the kick scooter either the hollow space of the rear end of the LH rear fork 16, or the hollow space of the rear end of the RH rear fork 17 can be used, whereas into one of the said hollow spaces the adaptor 47 is demountably inserted; the unmarked lamp is then fitted into the adaptor, as illustrated at FIG. 21.

### Industrial Applicability

The kick scooter with the new solution of the frame can be with advantage used for city riding, for riding on communications designated for the purpose, or for sport riding, off-road riding, dog scootering or dog-team scootering. That means, it can be used anywhere, where versatility of the kick scooter use is required, while maintaining the condition of the rider's safety.

## Claims

1. The kick scooter frame consisting of the down tube (11), the carrying frame (12A) or the carrying frame (12B), further of the footrest (18), brace (19) and kickstand (38), which consists of the tube (39), the extension (43), the flexible member (40), the foot (41) and the plug (44), while the carrying frame (12A) contains the LH arm (13) with the LH rear fork (16), the RH arm (14) with the RH rear fork (17), between whose there is placed the central platform (15) and while the carrying frame (12B) contains also the LH arm (13) with the LH rear fork (16), the RH arm (14) with the RH rear fork (17), between whose the central platform (15) and further the LH widening (27) and the RH widening (28) are placed, is **characterized in that** the LH arm (13) together with the LH rear fork (16) and the RH arm (14) together with the RH rear fork (17) get forkwise widened towards the rear wheel (21), while the imaginary longitudinal axis of the central platform (15) is identical to the longitudinal axis of the kick scooter, which consists of the imaginary connection line of the front wheel (20) and the rear wheel (21) of the kick scooter.

2. The kick scooter frame according to the patent claim 1, is **characterized in that** the LH widening (27) is permanently fixed to the left side of the LH arm (13) and further the RH widening (28) is permanently fixed to the right side of the RH arm (14).

3. The kick scooter frame according to the patent claim 1, is **characterized in that** the front parts of the LH arm (13) and also the front parts of the RH arm (14) are towards the front wheel (20) shaped into the elongated "U" shape and at the same time bent upwards and shaped in such a manner, that they approach each other, while in the point of the quoted approach they are permanently fastened to the lower part of the down tube (11).

4. The kick scooter frame according to the patent claim 1, is **characterized in that** the front part of the LH arm (13) as well as the front part of the RH arm (14) are towards the front wheel (20) modified in shape and bent upwards, so that they approach each other till they eventually meet in a single point, where permanent connection of the said parts with the lower part of the down tube (11) is carried out.

5. The kick scooter frame according to some of the patent claims 1 to 2, is **characterized in that** the LH arm (13) is towards the rear wheel (21) raised up by bending, thereby it smoothly transforms into the LH rear fork (16), whereas the RH arm (14) is towards the rear wheel (21) also raised up by bending, thereby it smoothly transforms into the RH rear fork (17).

6. The kick scooter frame according to some of the previous patent claims, is **characterized in that** the LH dropout (22) is formed at the LH rear fork (16) and the RH dropout (23) is formed at the RH rear fork (17) too, whereas both these dropouts (22) and (23) are fully identical in shape and dimensions.

7. The kick scooter frame according to some of the previous patent claims, is **characterized in that** the upper surfaces of the LH arm (13) and the RH arm (14) as well as the upper surfaces of the LH widening (27) and the RH widening (28) are fitted with more than two projections (29), which are are separated from each other by regular spaces, while the strip (30) is parmanently fixed onto the upper surface of the central platform (15) by means of unmarked rivets or other fastening devices.

8. The kick scooter frame according to some of the previous patent claims, is **characterized in that** the projections (29) or the strip (30) are fixed onto the upper surfaces of the parts, of which the carrying frames (12A) or (12B) consist, in various combinations, while the profile of the strip (30) is always adapted either to the flat surface of the central platform (15) or to round surface of the LH arm (13), the RH arm (14), the LH widening (27) and the RH widening (28).

9. The kick scooter frame according to some of the previous patent claims, is **characterized in that** the at the front part of the LH arm (13) as well as at the front part of the RH arm (14), U-shaped reinforcement (33) is permanently fastened, whereas one of the imaginary arms of the U-shaped reinforcement (33) is permanently connected to the lower surface of the LH arm (13) and the other part of the imaginary arms of the U-shaped reinforcement (33) is permanently connected to the lower surface of the RH arm (14).

10. The kick scooter frame according to some of the previous patent claims, is **characterized in that** the LH reinforcement (34) is permanently fastened to the lower surface of the LH arm (13) and the RH reinforcement (35) is permanently fastened to the lower surface of the RH arm (14), whereas the front parts of both said reinforcements (34) and (35) towards the front wheel (20) touch the imaginary arms of the U-shaped reinforcement (33) and the LH reinforcement (34) towards the rear wheel (21) is permanently fastened to the lower surface of the LH rear fork (16) and the RH reinforcement (35) towards the rear wheel (21) is permanently fastened to the lower surface of the RH rear fork (17).

11. The kick scooter frame according to some of the previous patent claims, is **characterized in that** the flexible member (40) is inserted into the unmarked hollow part, which passes through the whole length of the tube (39) and also the extension (43); one end of the flexible member (40) being fastened inside the foot (41), while the other end of the flexible member (40) passing through the unmarked hollow part of the bushing (37), where it is fastened inside the lower part of the tube (39) or inside the extension (43) or in the plug (44).

12. The kick scooter frame according to some of the previous patent claims, is **characterized in that** the unmarked loose end of the mudguard (24) is fitted with the sleeve (31), in which at least two slots (32) are carried out.

13. The kick scooter frame according to some of the previous patent claims, is **characterized in that** the adaptor (47) is inserted into the hollow space of the LH rear fork (16), or into the hollow space of the RH rear fork (17).

14. The kick scooter frame according to some of the previous patent claims, is **characterized in that** the down tube (11) is of drop-like cross section along its whole length.

## Amended claims

### Amended claims in accordance with Rule 137(2) EPC.

1. A kick scooter frame comprising a down tube (11), which is a part of a carrying frame (12A) or a carrying frame (12B), further of a kickstand (38), which consists of a tube (39), an extension (43), a flexible member (40), a foot (41) and a plug (44), while the carrying frame (12A) comprises of a LH arm (13) with a LH rear fork (16), a RH arm (14) with a RH rear fork (17), between whose there is placed a central platform (15) and where the LH arm (13) is connected to the RH arm (14) with a footrest (18) and also with a brace (19), while the carrying frame (12B) comprises also the LH arm (13) with the LH rear fork (16), the RH arm (14) with the RH rear fork (17), between whose the central platform (15) and further a LH widening (27) and a RH widening (28) are placed, and where the LH arm (13) is connected to the RH arm (14) with the footrest (18) and also with the brace (19), **is characterized in that** the LH arm (13) together with the LH rear fork (16) and the RH arm (14) together with the RH rear fork (17) forkwise diverge towards a rear wheel (21), while the imaginary longitudinal axis of the central platform (15) is identical to the longitudinal axis of the kick scooter, which is formed by the imaginary connection line of a front wheel (20) and the rear wheel (21) of the kick scooter, and where on the down tube (11) a holder (36) with a bushing (37) are fastened, into which the kickstand (38) is movably placed, while into the flexible member (40) is inserted into the unmarked hollow part, which passes through the whole length of the tube (39) and also the extension (43); one end of the flexible member (40) being fastened inside the foot (41), while the other end of the flexible member (40) passing through the unmarked hollow part of the bushing (37), where it is fastened inside the lower part of the tube (39) or inside the extension (43) or in the plug (44).

2. The kick scooter frame according to the patent claim 1 **is characterized in that** the LH widening (27) is permanently fixed to the left side of the LH arm (13) and further the RH widening (28) is permanently fixed to the right side of the RH arm (14).

3. The kick scooter frame according to the patent claim 1 **is characterized in that** the front parts of the LH arm (13) and also the front parts of the RH arm (14) are towards the front wheel (20) shaped into the elongated "U" shape and at the same time bent upwards and shaped in such a manner, that they approach each other, while in the point of the quoted approach they are permanently fastened to the lower part of the down tube (11).

4. The kick scooter frame according to the patent claim 1 **is characterized in that** the front part of the LH arm (13) as well as the front part of the RH arm (14) are towards the front wheel (20) modified in shape and bent upwards, so that they approach each other till they eventually meet in a single point, where permanent connection of the said parts with the lower part of the down tube (11) is carried out.

5. The kick scooter frame according to some of the patent claims 1 to 2 **is characterized in that** the LH arm (13) is towards the rear wheel (21) raised up by bending, thereby it smoothly transforms into the LH rear fork (16), whereas the RH arm (14) is towards the rear wheel (21) also raised up by bending, thereby it smoothly transforms into the RH rear fork (17).

6. The kick scooter frame according to some of the previous patent claims **is characterized in that** a LH dropout (22) is formed at the LH rear fork (16) and a RH dropout (23) is formed at the RH rear fork (17) too, whereas both these dropouts (22) and (23) are fully identical in shape and dimensions.

7. The kick scooter frame according to some of the previous patent claims **is characterized in that** the upper surfaces of the LH arm (13) and the RH arm (14) as well as the upper surfaces of the LH widening (27) and the RH widening (28) are fitted with more than two projections (29), which are are separated from each other by regular spaces, while a strip (30) is parmanently fixed onto the upper surface of the central platform (15) by means of unmarked rivets or other fastening devices.

8. The kick scooter frame according to some of the previous patent claims **is characterized in that** the projections (29) or the strip (30) are fixed onto the upper surfaces of the parts, of which the carrying frames (12A) or (12B) consist, in various combinations, while the profile of the strip (30) is always adapted either to the flat surface of the central platform (15) or to round surface of the LH arm (13), the RH arm (14), the LH widening (27) and the RH widening (28).

9. The kick scooter frame according to some of the previous patent claims **is characterized in that** the at the front part of the LH arm (13) as well as at the front part of the RH arm (14), an U-shaped reinforcement (33) is permanently fastened, whereas one of the imaginary arms of the U-shaped reinforcement (33) is permanently connected to the lower surface of the LH arm (13) and the other part of the imaginary arms of the U-shaped reinforcement (33) is permanently connected to the lower surface of the RH arm (14).

10. The kick scooter frame according to some of the previous patent claims **is characterized in that** a LH reinforcement (34) is permanently fastened to the lower surface of the LH arm (13) and a RH reinforcement (35) is permanently fastened to the lower surface of the RH arm (14), whereas the front parts of both said reinforcements (34) and (35) towards the front wheel (20) touch the imaginary arms of the U-shaped reinforcement (33) and the LH reinforcement (34) towards the rear wheel (21) is permanently fastened to the lower surface of the LH rear fork (16) and the RH reinforcement (35) towards the rear wheel (21) is permanently fastened to the lower surface of the RH rear fork (17).

11. The kick scooter frame according to some of the previous patent claims **is characterized in that** the unmarked loose end of a mudguard (24) is fitted with a sleeve (31), in which at least two slots (32) are carried out.

12. The kick scooter frame according to some of the previous patent claims **is characterized in that** an adaptor (47) is inserted into the hollow space of the LH rear fork (16), or into the hollow space of the RH rear fork (17).

13. The kick scooter frame according to some of the previous patent claims **is characterized in that** the down tube (11) is of drop-like cross section along its whole length.
